# EUROPÄISCHE PATENTSCHRIFT

(11) **EP 0 929 815 B1**
(45) Veröffentlichungstag und Bekanntmachung des Hinweises auf die Patenterteilung: **30.01.2002**
(21) Anmeldenummer: 97910400.7
(22) Anmeldetag: 01.10.1997
(51) Int. Cl.: G01P 3/44, F16C 19/54

(54) **WÄLZLAGER MIT EINER INTEGRIERTEN DREHZAHLMESSEINRICHTUNG**
ROLLING BEARING WITH SPEED MEASUREMENT DEVICE
PALIER A ROULEMENT DOTE D'UN DISPOSITIF DE MESURE DE VITESSE

(30) Priorität: 04.10.1996 DE 19640895
(43) Veröffentlichungstag der Anmeldung: 21.07.1999
(73) Patentinhaber: INA Wälzlager Schaeffler oHG, 91072 Herzogenaurach (DE)
(72) Erfinder: LUNZ, Erich, D-91475 Lonnerstadt (DE); DIEDRICH, Michael, D-91074 Herzogenaurach (DE); SCHWINGHAMMER, Reinhard, D-90587 Tuchenbach (DE)
(86) Internationale Anmeldenummer: EP9705397
(87) Internationale Veröffentlichungsnummer: WO9815838

(56) Entgegenhaltungen:
- EP-A- 0 449 671
- FR-A- 2 531 507
- US-A- 4 861 171
- US-A- 4 884 901
- US-A- 4 906 112

## Beschreibung

### Gebiet der Erfindung

Die Erfindung betrifft ein Wälzlager, das einen Lagerinnenring, einen Lageraußenring und zwischen diesen angeordnete Wälzkörper für die radiale Lagerung enthält, wobei an dem Lagerinnenring ein weiterer Ring stirnseitig angrenzt und der Lageraußenring an dem Lagerinnenring und dem weiteren Ring zusätzlich mit Axialwälzlagern drehbar gelagert ist.

### Hintergrund der Erfindung

Aus dem Dokument DE-A-3 905 251 ist ein Wälzlager mit einer Vorrichtung zum Ermitteln des in einer Welle übertragenen Drehmomentes bekannt, welches längs der Welle zwei in einem axialen Abstand voneinander angeordnete Drehzahlmeßeinrichtungen mit jeweils einem Meßwert-Sensor und einem scheibenförmigen Meßwertgeber benötigt. Hier bildet die Welle den Lagerinnenring für die als Zylinderrollen ausgebildeten Wälzkörper. Der Lageraußenring benötigt für die Sensoren axiale Verlängerungen mit Ausnehmungen, in welchen die Sensoren gehalten sind, so daß er ein konstruktiv aufwendiges Bauteil bildet.

Das Dokument FR-A-2 531 507 zeigt ein Wälzlager der eingangs genannten Art, bei welchem ein als Stütz- und Lauffläche für die Wälzkörper eines der Axialwälzlager dienender Ring an einer Stirnseite des Lagerinnenringes befestigt ist. Er ist von einer Lippendichtung und einem diese haltenden Aufnahmering umgeben, der stirnseitig an dem Lageraußenring angeschraubt ist. An der anderen Stirnseite des Lagerinnenringes ist ein zweiter Laufring für das andere Axialwälzlager als einzelnes Bauteil befestigt. Daher ergibt sich bei diesem Lager insgesamt ein hoher Konstruktions- und Montageaufwand. Eine Drehzahlmeßeinrichtung enthält dieses Lager nicht.

Ein aus dem Dokument DE-A-3 733 495 bekanntes Wälzlager weist einen an dem Lageraußenring befestigten Dichtungsaufnahmering auf, in dem eine Winkelkodierung in Form einer Verzahnung eingearbeitet ist. Den Zähnen mit geringem Luftspalt radial gegenüberliegend ist ein Sensor angeordnet, der beispielsweise auf induktivem Wege arbeitet und bei jedem vorbeibewegten Zahn ein Signal erzeugt. Anhand der pro Zeiteinheit vorbeilaufenden Zähne bzw. vom Sensor erzeugten Signale können in einer nachfolgenden Auswerteschaltung Drehzahlen, Beschleunigungen oder Verzögerungen ermittelt werden, die in Steuer- oder Regelsignale für Antriebe oder Bremsen umgesetzt werden können.

Ein Nachteil dieses Wälzlagers besteht darin, daß sich die Verzahnung hier als Meßwertgeber radial oder axial außerhalb des Lageraußenringes befindet und der Sensor daher noch weiter entfernt von dem Lageraußenring angeordnet werden muß. Dadurch wird ein großer Bauraum für das Lager erforderlich. Über die konstruktive Anordnung und Halterung des Sensors enthält dieses Dokument keine genauen Angaben.

### Zusammenfassung der Erfindung

Der Erfindung liegt die Aufgabe zugrunde, ein kostengünstig herstellbares Wälzlager mit nur geringem Bauraum zu schaffen, in welchem ein Drehzahlsensor integriert werden kann.

Diese Aufgabe wird erfindungsgemäß dadurch gelöst, daß das Wälzlager eine integrierte Drehzahlmeßeinrichtung enthält, welche mindestens einen Meßwert-Sensor und einen Meßwert-Geber aufweist, wobei der weitere Ring als Meßwert-Geberring und mit einer Laufbahn für eines der beiden Axialwälzlager ausgebildet ist, der an einem der Lagerringe befestigt ist und an dessen Außenmantelfläche eine in Umfangsrichtung verlaufende Skala angeordnet ist, und wobei der Sensor in einer den Geberring in Umfangsrichtung umschließenden Trägerkonstruktion angeordnet ist, die an dem Lageraußenring stirnseitig angrenzt.

In dem Bereich des Lageraußenringes wird also eine Trägerkonstruktion eingesetzt, die gleichzeitig mehrere Funktionen erfüllen kann. Sie dient zum einen dazu, den Meßwert-Sensor in seiner exakten Stellung in bezug auf den Geberring zu halten.

Da zur Abdichtung der Skala nach außen an dem Geberring und zwischen diesem und der Trägerkonstruktion zwei in Umfangsrichtung sich erstreckende Lippendichtungen angeordnet sein können, dient die Trägerkonstruktion in diesem Fall außerdem dazu, die Dichtungen zu halten. Somit werden durch den Einsatz der Trägerkonstruktion die einzelnen Bauteile in ihrer richtigen Position zueinander fixiert.

Die an dem Lageraußenring stirnseitig angrenzende Trägerkonstruktion kann mit diesem in einer kreiszylindrischen Ausnehmung eines Maschinengestells angeordnet sein. Der Lageraußenring kann mit Schrauben an dem Maschinengestell befestigt sein, die in zum Wälzlager achsparallelen Gewindebohrungen des Maschinengestells eingeschraubt sind.

### Kurze Beschreibung der Zeichnungen

Ausführungsbeispiele der Erfindung sind in den Zeichnungen dargestellt und werden im folgenden näher beschrieben. Es zeigen:

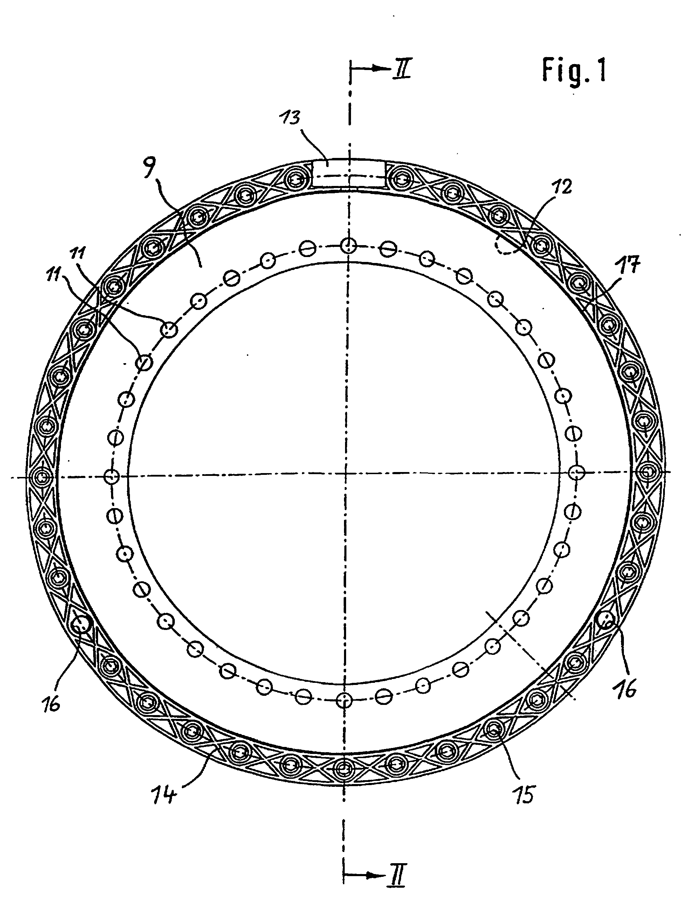

- Figur 1: eine stirnseitige Ansicht eines Geberringes, der von einer Trägerkonstruktion umfaßt ist, als Bauteile eines erfindungsgemäßen Wälzlagers;

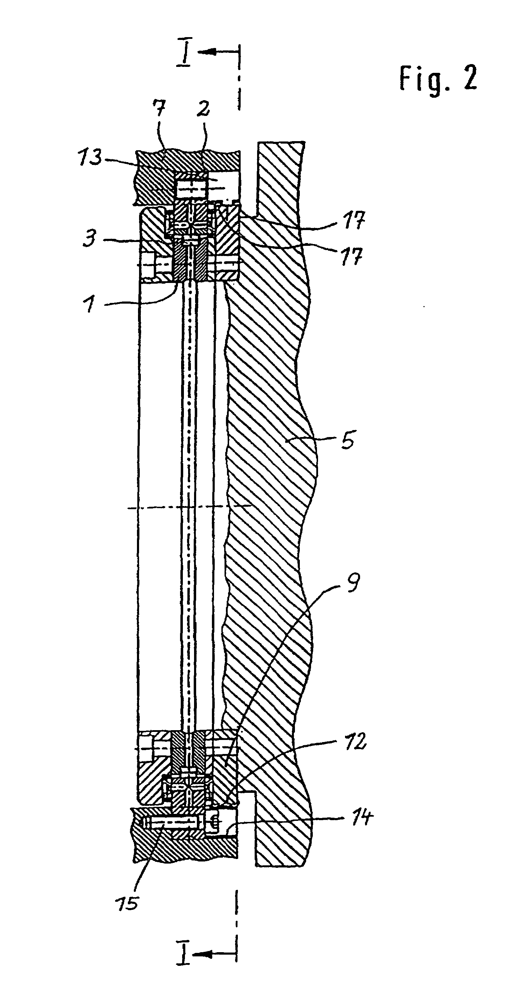

- Figur 2: einen Längsschnitt durch ein Wälzlager mit einem Geberring und einer Trägerkonstruktion gemäß Linie II-II der Figur 1;

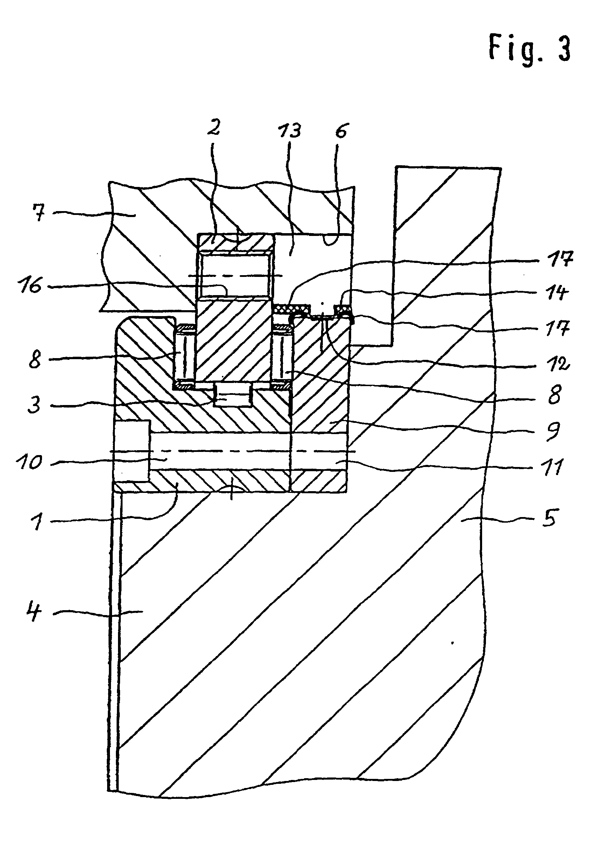

- Figur 3: einen vergrößerten Teilbereich des Längsschnitts eines weiteren Lagers.

### Ausführliche Beschreibung der Zeichnungen

Die erfindungsgemäßen Lager sind als Rundtischlager dargestellt, sie können auch als Drehverbindungen verwendet werden, die in Rundschalttischen oder Rundtakttischen eingebaut werden. Zwischen einem Lagerinnenring 1 und einem Lageraußenring 2 sind als Rollen ausgebildete Wälzkörper 3 für die radiale Lagerung der relativ zueinander verdrehbaren Bauteile angeordnet. Der Lagerinnenring 1 sitzt auf einer Zentrierung oder Welle 4 eines drehbaren Bauteils 5, während der Lageraußenring 2 innerhalb einer Ausnehmung 6 eines festen Maschinengestells 7 angeordnet ist.

Zusätzlich zu der radialen Lagerung ist der drehbare Lagerinnenring 1 gegenüber dem festen Lageraußenring 2 mit zwei Axialwälzlagern 8 gelagert. Hierzu ist der Lagerinnenring 1 als Winkelring mit einer kreisringförmigen Laufbahn ausgebildet, an der sich der Lageraußenring 2 mittels des einen Axialwälzlagers 8 axial abstützt. In der entgegengesetzten axialen Richtung liegt das weitere Axiallager 8 an einem Geberring 9 an, der stirnseitig an dem Lagerinnenring 1 angrenzt und an diesem befestigt ist. Die Befestigung kann mit Hilfe von Schrauben erfolgen, die in achsparallele fluchtende Bohrungen des Lagerinnenringes 1 und des Geberringes 9 eingeschraubt werden. Dabei befinden sich die Bohrungen 10 in dem Lagerinnenring 1 und die Bohrungen 11 in dem Geberring 9.

Der Geberring 9 ist Teil einer Drehzahlmeßeinrichtung und weist an seinem äußeren Umfang eine Skala 12 auf. Diese verläuft in Umfangsrichtung des Geberringes 9 und ist mit einem geringen Luftspalt an einem Sensor 13 angeordnet, der von einer Trägerkonstruktion 14 gehalten wird. In den Ausführungsbeispielen ist an dem Lager ein einziger Sensor 13 angeordnet. Es ist aber auch möglich, mehrere Sensoren 13 an einem Lager vorzusehen.

Die Trägerkonstruktion 14 ist als Ring ausgebildet und hat denselben Außendurchmesser wie der Lageraußenring 2, sie ist ebenso wie dieser innerhalb der Ausnehmung 6 des Maschinengestells 7 angeordnet. Die Trägerkonstruktion 14 weist in Umfangsrichtung in Abständen hintereinander angeordnete achsparallele Bohrungen auf, die es ermöglichen, Schrauben 15 für die Befestigung des Lageraußenringes 2 an dem Maschinengestell 7 hindurchzustecken. Außerdem weist der Lageraußenring 2 drei Gewinde 16 für Abdrückschrauben auf, die in Umfangsrichtung in gleichmäßigen Abständen hintereinander achsparallel in dem Lageraußenring 2 angebracht sind. Mit Hilfe der Abdrückschrauben kann der Lageraußenring aus dem Maschinengestell 7 herausgelöst werden.

Um den Abtastbereich des Sensors 13 an der Skala 12 nach außen zu schützen, sind an dem Geberring 9 am Außenumfang axial zu beiden Seiten der Skala 12 Lippendichtungen 17 angeordnet. Bei der Drehung des Bauteils 5 gleiten die Lippendichtungen 17 an der Trägerkonstruktion 14 entlang. Sie bewirken eine vollständige Abdichtung der Skala 12 und des Meßbereichs des Sensors 13.

### Bezugszahlenliste

- 1: Lagerinnenring
- 2: Lageraußenring
- 3: Wälzkörper
- 4: Welle
- 5: drehbares Bauteil
- 6: Ausnehmung
- 7: Maschinengestell
- 8: Axialwälzlager
- 9: Geberring
- 10: Bohrung
- 11: Bohrung
- 12: Skala
- 13: Sensor
- 14: Trägerkonstruktion
- 15: Schraube
- 16: Gewinde für Abdrückschraube
- 17: Lippendichtung

## Patentansprüche

1. Wälzlager, das einen Lagerinnenring (1), einen Lageraußenring (2) und zwischen diesen angeordnete Wälzkörper (3) für die radiale Lagerung enthält, wobei an dem Lagerinnenring (1) ein weiterer Ring stirnseitig angrenzt und der Lageraußenring (2) an dem Lagerinnenring (1) und dem weiteren Ring zusätzlich mit Axialwälzlagern (8) drehbar gelagert ist, **dadurch gekennzeichnet, daß** es eine integrierte Drehzahlmeßeinrichtung enthält, welche mindestens einen Meßwert-Sensor (13) und einen Meßwert-Geber aufweist, wobei der weitere Ring als Meßwert-Geberring (9) und mit einer Laufbahn für eines der beiden Axialwälzlager (8) ausgebildet ist, der an einem der Lagerringe (1, 2) befestigt ist und an dessen Außenmantelfläche eine in Umfangsrichtung verlaufende Skala (12) angeordnet ist, und wobei der Sensor (13) in einer den Geberring (9) in Umfangsrichtung umschließenden Trägerkonstruktion (14) angeordnet ist, die an dem Lageraußenring (2) stirnseitig angrenzt.

2. Wälzlager nach Anspruch 1, **dadurch gekennzeichnet, daß** die den Geberring (9) in Umfangsrichtung umschließende Trägerkonstruktion (14) als einzelnes ringförmiges Bauteil ausgebildet ist, dessen Außendurchmesser demjenigen des Lageraußenringes (2) entspricht.

3. Wälzlager nach Anspruch 1, **dadurch gekennzeichnet, daß** die Skala (12) in der Form einer Verzahnung ausgebildet ist.

4. Wälzlager nach Anspruch 2, **dadurch gekennzeichnet, daß** zur Abdichtung der Skala (12) nach außen an dem Geberring (9) und zwischen diesem und der Trägerkonstruktion (14) zwei in Umfangsrichtung sich erstreckende Lippendichtungen (17) angeordnet sind.

5. Wälzlager nach Anspruch 2, **dadurch gekennzeichnet, daß** der Lageraußenring (2) drei achsparallele Gewinde (16) für Abdrückschrauben aufweist, die in Umfangsrichtung in Abständen hintereinander angeordnet sind.

6. Maschinengestell mit einem Wälzlager nach Anspruch 1, **dadurch gekennzeichnet, daß** die Trägerkonstruktion (14) mit dem Lageraußenring (2) in einer kreiszylindrischen Ausnehmung (6) des Maschinengestells (7) angeordnet ist.

7. Maschinengestell nach Anspruch 6, **dadurch gekennzeichnet, daß** der Lageraußenring (2) mit Schrauben (15) an dem Maschinengestell (7) befestigt ist, die in achsparallelen Gewindebohrungen des Maschinengestells (7) eingeschraubt sind.

## Claims

1. Rolling bearing comprising an inner bearing ring (1), an outer bearing ring (2) and rolling elements (3) arranged therebetween for the radial mounting, a further ring adjoining the inner bearing ring (1) endwise, and the outer bearing ring (2) being additionally mounted through thrust rolling bearings (8) for rotation on the inner bearing ring (1) and the further ring, **characterised in that** it comprises an integrated speed measuring device having at least one measured-value sensor (13) and one measured-value emitter, the further ring is configured as a measured-value emitter ring (9) and with a raceway for one of the two thrust rolling bearings (8), said further ring is fixed on one of the bearing rings (1, 2) and a scale (12) extending in peripheral direction is provided on its outer peripheral surface, the sensor (13) being arranged in a carrier structure (14) that surrounds the emitter ring (9) in peripheral direction while adjoining the outer bearing ring (2) endwise.

2. Rolling bearing according to Claim 1, **characterised in that** the carrier structure (14) surrounding the emitter ring (9) in peripheral direction is made as a separate annular component, the outer diameter of which corresponds to that of the outer bearing ring (2).

3. Rolling bearing according to Claim 1, **characterised in that** the scale (12) is configured in the form of a toothing.

4. Rolling bearing according to Claim 2, **characterised in that,** for sealing the scale (12) from the outside, two lip seals (17) extending in peripheral direction are arranged on the emitter ring (9) and between this and the carrier structure (14).

5. Rolling bearing according to Claim 2, **characterised in that** the outer bearing ring (2) comprises three longitudinally extending threads (16) for forcing screws, which threads are arranged spaced behind one another in peripheral direction.

6. Machine frame incorporating a rolling bearing according to Claim 1, **characterised in that** the carrier structure (14) together with the outer bearing ring (2) is arranged in a circular cylindrical recess (6) of the machine frame (7).

7. Machine frame according to Claim 6, **characterised in that** the outer bearing ring (2) is fixed on the machine frame (7) with screws (15) that are screwed into longitudinal threaded bores of the machine frame (7).

## Revendications

1. Palier à roulement comprenant une bague interne de roulement (1), une bague externe de roulement (2) et des corps roulants (3) agencés entre celles-ci pour le montage radial, une autre bague étant agencée en aboutissement frontal sur la bague interne de roulement (1) tandis que la bague externe de roulement (2) est montée mobile en rotation supplémentairement par des butées (8) sur la bague interne de roulement (1) et sur l'autre bague, **caractérisé en ce que** le palier à roulement comprend un dispositif intégré de mesure de vitesse de rotation qui comprend au moins un détecteur de valeur mesurée (13) et un émetteur de valeur mesurée, l'autre bague étant configurée sous la forme d'un anneau émetteur de valeur mesurée (9) ayant une piste de roulement pour l'une des deux butées (8), l'anneau émetteur (9) est fixé sur l'une des bagues de roulement (1, 2) et, sur sa surface périphérique extérieure, est agencée une échelle (12) qui s'étend en direction périphérique, le détecteur (13) étant agencé dans une structure de support (14) qui entoure l'anneau émetteur (9) en direction périphérique en étant en aboutissement frontal sur la bague externe de roulement (2).

2. Palier à roulement selon la revendication 1, **caractérisé en ce que** la structure de support (14) qui entoure l'anneau émetteur (9) en direction périphérique est configurée sous la forme d'un composant annulaire séparé dont le diamètre extérieur correspond au celui de la bague externe de roulement (2).

3. Palier à roulement selon la revendication 1, **caractérisé en ce que** l'échelle (12) est configurée sous la forme d'une denture.

4. Palier à roulement selon la revendication 2, **caractérisé en ce que,** pour l'étanchéification de l'échelle (12) par l'extérieur, deux joints à lèvres (17) s'étendant en direction périphérique sont agencés sur l'anneau émetteur (9) et entre celui-ci et la structure de support (14).

5. Palier à roulement selon la revendication 2, **caractérisé en ce que** la bague externe de roulement (2) comprend trois taraudages (16) longitudinaux pour des boulons à chasser, lesdits taraudages étant agencés à l'écart, l'une derrière l'autre, en direction périphérique.

6. Bâti de machine incorporant un palier à roulement selon la revendication 1, **caractérisé en ce que** la structure de support (14) avec la bague externe de roulement (2) est agencée dans un évidement cylindrique circulaire (6) du bâti de machine (7).

7. Bâti de machine selon la revendication 6, **caractérisé en ce que** la bague externe de roulement (2) est fixée sur le bâti de machine (7) par des vis (15) qui sont vissées dans des alésages taraudés longitudinaux du bâti de machine (7).
